# EUROPEAN PATENT SPECIFICATION

(11) **EP 2 924 832 B1**
(45) Date of publication and mention of the grant of the patent: **12.10.2016**
(21) Application number: 14162146.6
(22) Date of filing: 27.03.2014
(51) Int. Cl.: H02G 3/18

(54) **Floor box system**
Bodenkastensystem
Système de boîtier au sol

(43) Date of publication of application: 30.09.2015
(73) Proprietor: Vergokan, 9700 Oudenaarde (BE)
(72) Inventor: Leus, Thomas, 9050 GENTBRUGGE (BE); Delombaerde, Ellen, 9790 PETEGEM AAN DE SCHELDE (BE); Colpaert, Stijn, 9700 OUDENAARDE (BE)
(74) Representative: Gevers Patents

(56) References cited:
- US-A- 5 160 808

## Description

### Technical field

The present invention relates to a floor box system and more particular to a modular floor box system.

The present invention further relates to a cover structure for such a floor box system.

### Background art

Floor box systems are known. They are typically used for connecting floor trunking in a floor. In the floor trunking, cables, such as for example electrical cables or networking cables, are guided throughout the floor. The floor trunking is connected to floor boxes of the floor box systems from different directions such that the cables therein are guided in different directions to locations where they are needed. The floor box systems are typically provided with an access at the top, such that the cables are accessible from above for being connected with external devices. For this reason the floor box is usually also equipped with components such as sockets. The sockets which are connected to the cabling in the floor box are provided for plugging in the external devices.

The floor boxes and the floor trunking are arranged on a floor foundation, for example a concrete floor, and thereby connected with each other. Thereafter, intermediate layers of the floor are provided on the floor foundation, and thus also on the floor boxes and the floor trunking. The intermediate layers may for example be a layer of insulation material or a screed layer. To apply the intermediate layers it is important that the floor boxes are sealed off such that no or only a limited amount of floor material, such as for example insulation foam or screed, may enter the floor boxes. After applying the intermediate layers, the floor is provided with a floor covering, such as for example carpet or tiles.

A typical floor box system comprises a bottom plate, side walls provided with openings for the floor trunking or at least configured for providing the openings for the floor trunking, and a covering part. The covering part may be a plate for covering the floor box, but may also be a cover frame which is arranged for holding a cover plate, or which is arranged with a hinged cover. The covering part may further also be provided with a component holder frame in which one or more component holders can be arranged. The component holders are provided for holding components such as for example sockets for plugging in external devices.

Known floor box systems exist in many different types. There are different types for different height ranges of the floor foundation to the top floor. There are different types for different floor trunking. There are different types for different types of covers. This causes issues for manufacturers and well as distributors because all these types needs storage, production planning, catalogue place, etc. See for instance US-A-5160808.

In one type of floor box systems, floor box systems are provided with a fixed height, meaning that the covering part is positioned at a fixed distance with respect to the bottom plate. With this type of floor box systems, the installer has to know well in advance the exact height of floor with respect to the floor foundation. Furthermore, any errors during installation of the floor creates issues to install the floor box system.

Most types of floor box systems has a hinged cover and a cable opening. Two structures are known. In a first structure, the cable opening is part of the fixed structures such that the cables are not influenced by opening the cover. This has the disadvantage that the opening requires quite some space next to the cover which makes or the cover smaller or the overall dimensions of the floor box system larger. In a second structure, the cable opening is an opening in the hinged covers. This has the advantage that there is no space needed around the cover for the cable opening but has the disadvantage that cables has to move relative to the opening when the cover is opened or closed.

### Disclosure of the invention

It is an aim of the present invention to provide a floor box system which solves one or more of the problems indicated in the state of the art.

This aim is achieved according to the invention with the floor box system showing the technical characteristics of the first independent claim.

The floor box system for mounting on a floor foundation comprises a floor box (1) configured to be positioned on the floor foundation, a cover assembly arranged to be provided on the floor box wherein said cover assembly is one of at least a first type of cover assemblies and a second type of cover assemblies, and attachment means for attaching the cover assembly to the floor box, wherein the floor box comprises at least two positions for positioning the attachment means to the floor box wherein the cover assembly is attachable to the floor box with the attachment means in a first position of the at least two positions when the cover assembly is a cover assembly of the first type of cover assemblies and the cover assembly is attachable to the floor box with the attachment means in a second position of the at least two positions when the cover assembly is a cover assembly of the second type of cover assemblies.

This has the advantage that multiple configurations can be made using the same floor box.

In an embodiment of the invention, the attachment means comprise at least three attachment elements and the floor box comprises at least two positions for each attachment element.

This structure provides the advantage of the flexibility to create multiple configurations with the same floor box in an cost effective manner.

In an embodiment of the invention, the floor box comprises a bottom plate and the at least two positions for each attachment element comprise slots in the bottom plate.

In an embodiment of the invention, each of the at least three attachment elements comprises extended side walls for attaching the attachment elements to a pair of slots in the bottom plate.

This has the advantage that the attachment means can be mounted without the need of a tool.

### Brief description of the drawings

The invention will be further elucidated by means of the following description and the appended figures.
Figure 1 shows in a perspective view from above an adjustable floor box according to an embodiment of the present invention.
Figure 2 shows the bottom plate of the adjustable floor box of Figure 1.
Figure 3 shows the top plate of the adjustable floor box of Figure 1.
Figure 4 shows in a perspective view from above the top plate of the adjustable floor box of Figure 1 and a formwork element.
Figure 5 shows in a perspective view from below the top plate and the formwork element of Figure 4 connected to each other.
Figure 6 shows in a perspective view from above an adjusting part of the adjustable floor box of Figure 1 positioned in the lowest predetermined position.
Figure 7 shows the adjusting part of Figure 6 positioned in the highest predetermined position.
Figure 8 shows in a perspective view from below the bottom part and the top part of the adjusting part of Figure 6.
Figure 9 shows in a perspective view from above the bottom part of the adjusting part of Figure 6.
Figure 10 shows an exploded view of a cover assembly according to an embodiment of the present invention.
Figure 11 shows an exploded view of another cover assembly according to an embodiment of the invention.
Figure 12 shows an exploded view of a floor box system according to an embodiment of the invention.
Figure 13 shows an exploded view of another floor box system according to an embodiment of the invention.
Figures 14A, 14B and 14C illustrate the attachment of an attachment element to a bottom plate of a floor box according to an embodiment of the invention.
Figures 15A, 15B, 15C, 15D and 15E illustrate the attachment of another attachment element to another bottom plate of a floor box according to an embodiment of the invention.
Figures 16A and 16B show a cover structure according to an embodiment of the invention in open and closed position.
Figures 17A and 17B show another cover structure according to an embodiment of the invention in open and closed position.
Figure 18 shows a perspective view of a component support member according to an embodiment of the invention.
Figures 19A and 19B illustrate the mounting of a component support member in a component holder according to an embodiment of the invention.
Figure 20 shows a cross section of a component support member and a component holder while the component support member is mounted in the component holder.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

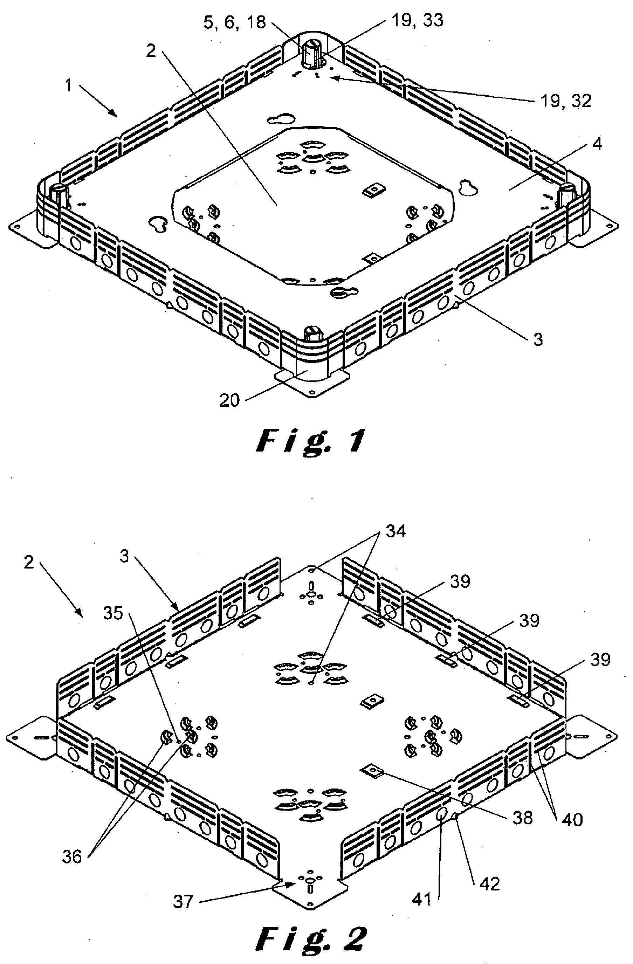

Figure 1 shows a perspective view of an embodiment of an adjustable floor box 1 according to the present invention. The figure illustrates the bottom plate 2 of the adjustable floor box 1 on which four adjusting parts 6 are arranged in the corners. The bottom plate 2 has side walls 3 which form together with the outer walls 20 of the adjusting parts 6 the side walls of the adjustable floor box 1. The top plate 4 of the adjustable floor box 1 is supported on the adjusting parts 6 and connected therewith.

The adjusting parts 6 are provided for positioning the top plate 4 at different predetermined distances from the bottom plate 2 corresponding to the height of different types of floor trunking (not shown). In an alternative embodiment an other structure for the adjusting means 5 is used to position the top plate 4 at different predetermined distances from the bottom plate 2. The adjusting means 5 comprise different predetermined positions, wherein each predetermined position of the adjusting means 5 positions the top plate 4 at a distance from the bottom plate 2 corresponding to the height of a different type of floor trunking. In the embodiment of Figure 1, the adjusting parts 6 comprise three predetermined positions which position the top plate at distances of 28 mm, 38 mm or 48 mm from the bottom plate 2, corresponding to the heights of three commonly used types of floor trunking.

Figure 1 further illustrates gripping means 18 on the adjusting parts 6. The gripping means 18 visible above the top plate 4. In the embodiment of Figure 1, the gripping means 18 are provided in the form of ribs extending over the height of the adjusting part. In alternative embodiments, the gripping means 18 may be an other structure which increases the grip on the adjusting parts 6. These gripping means 18 are turned for moving the adjusting parts 6 between the predetermined positions.

The adjusting parts 6 and the top plate 4 are provided with indicating means 19 for indicating in which of the predetermined positions the adjusting parts 6 are positioned. In the embodiment of Figure 1, the gripping means 18 on the adjusting parts 6 are provided with ribs 33 pointing to dotted markings 32 provided on the top plate 4. The top plate 4 is provided with a single dotted marking 32 for indicating a first predetermined position, with a double dotted marking 32 for indicating a second predetermined position, and with a triple dotted marking 32 for indicating a third predetermined position. As can be seen in the embodiment example shown in Figure 1, the adjusting parts 6 are positioned in the second predetermined position.

In the embodiment of Figure 1, the adjustable floor box 1 has a square shape. In alternative embodiments, the adjustable floor box has other shapes, such as circular, triangular, rectangular, pentagonal, or other polygonal shapes.

Figure 2 shows the bottom plate 2 of the adjustable floor box 1 of the embodiment of Figure 1 separately.

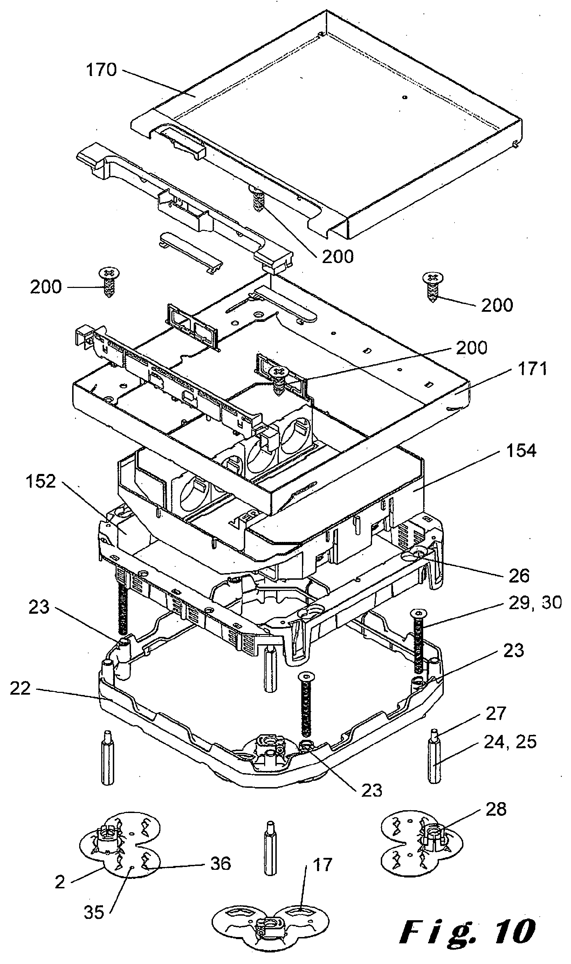

The bottom plate 2 is provided with a series of curved protruding walls 36 which are arranged in pairs with a small protrusion 35 in between each pair of curved protruding walls 36. One of the curved protruding walls 36 in each pair is provided with a central notch 17, as can be seen most clearly in Figure 10. The curved protruding walls 36 are used for connecting attaching elements 28 (shown in Figure 10) to the bottom plate 2. These attaching elements 28 are provided for attaching the stepwise adjusting means 24 of a cover assembly according to an embodiment of the invention with the bottom plate 2. The attaching elements 28 are slid in one direction in slots formed between the curved protruding walls 36 and the base plate of the bottom plate 2, after which the attaching elements 28 are rotated 90 degrees to engage under the curved protruding walls with edges on the attaching elements 28. The small hole 35 between the curved protruding walls 36 and the central notch 17 in the protruding walls 36 are provided for positioning the attaching elements 28 in the final position when they are rotated in the slots. In an alternative embodiment the hole 35 is a protrusion. Therefore, the attaching elements 28 are provided with corresponding holes and protrusions which are positioned in the small hole 35 and the central notch 17.

The bottom plate 2 of the adjustable floor box 1 is in the embodiment of Figure 2 further provided with openings 34 which are used for connecting the bottom plate 2 on the floor foundation on which the adjustable floor box 1 is arranged. These openings 34 are arranged in the far end of the corners of the bottom plate 2, and also nearby the curved protruding walls 36 in the bottom plate 2.

For aligning the adjustable floor box 1 on the floor foundation and for aligning the adjustable floor box 1 with the floor trunking, each side wall is provided centrally at the bottom with a protrusion 42 as a marking point.

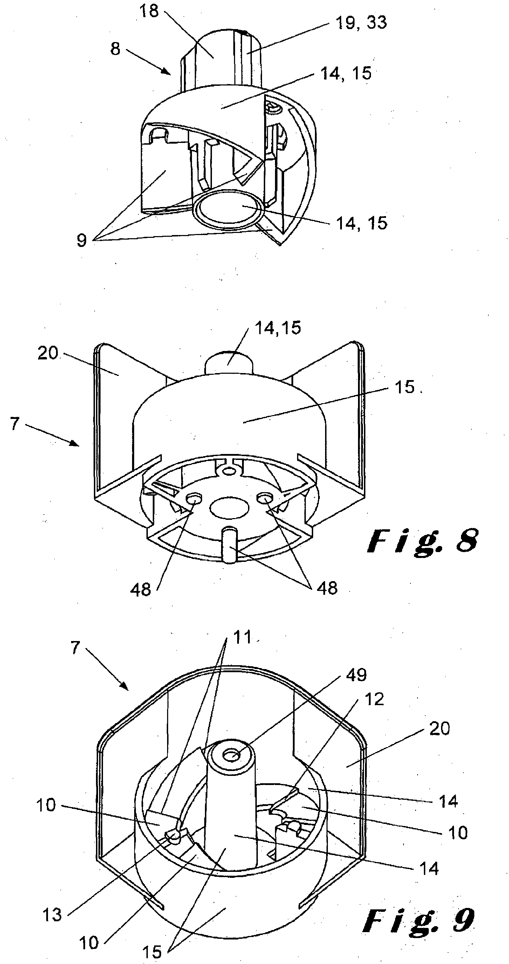

In the corners of the bottom plate, there are also provided openings 37 which are arranged in a "footprint" shape, i.e. one larger central opening with three smaller openings and a rectilinear opening arranged around it. In these openings 37 the adjusting parts 6 are positioned by means of protrusions 48 provided on the adjusting parts 6. Such protrusions 48 can be seen on the bottom part 7 of the adjusting part 6, shown in the embodiment of Figure 9.

Further, the bottom plate 2 is also provided with two ground terminal connection points 38. In the embodiment of Figure 2, these connection points 38 are rectangular protrusions provided with a hole.

Near the side walls, the bottom plate 2 is provided with protruding openings 39 facing the side walls. These protruding openings 39 are provided for connecting the floor trunking with the adjustable floor box 1 by sliding corresponding parts on the floor trunking in these protruding openings 39.

The side walls 3 of the bottom plate 2 are configured to provide openings for different types of floor trunking. Therefore, the side walls 3 are divided in pieces by means of vertically and horizontally arranged rectilinear openings 40 in the side walls 3. The rectilinear openings 40 are arranged at predetermined positions on the side walls 3, said predetermined positions corresponding with the height and width of different types of floor trunking. The rectilinear openings 40 allow the pieces, in which they divide the side walls 3, to be removed from the side walls 3. The pieces that are to be removed are chosen based on the height and the width of the floor trunking to be connected to the adjustable floor box 1.

The side walls 3 of the bottom plate 2 are also providing openings 41 for tubes carrying cables. In an alternative embodiment, the side walls 3 are provided with circular cut lines and these cut lines allow the parts of the side walls 3 surrounded by the cut lines to be removed from the side walls 3 by pushing them out, thereby leaving circular openings 41 through which the tubes may be arranged.

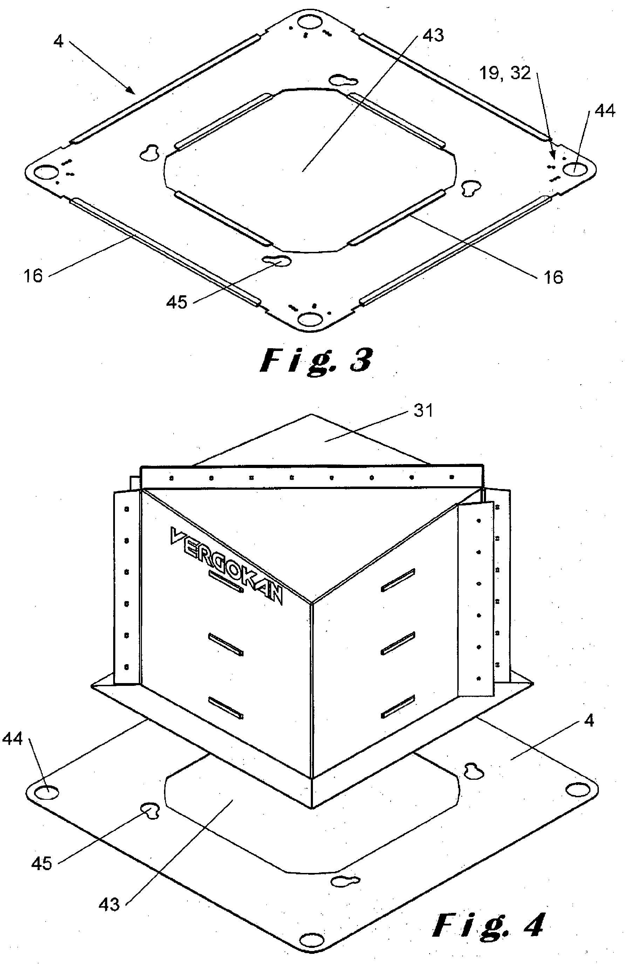

Figure 3 shows the top plate 4 of the adjustable floor box 1 of the embodiment of Figure 1 separately. The top plate 4 has a central opening 43 which provides access to the adjustable floor box 1 from above. In this way the cables arriving in the adjustable floor box are accessible for being connected with components arranged in a covering part which is suspended in a floor opening above the adjustable floor box 1, or which forms a part of a cover assembly according to an embodiment of the invention, such as shown for example in Figure 10.

Each corner of the top plate 4 has a connecting opening 44. These connecting openings 44 are used for connecting the top plate 4 with the adjusting parts 6. The gripping means 18 of the adjusting parts 6 are also inserted through the connecting openings 44, as can be seen in Figure 1, such that the adjusting parts 6 can be operated even when the top plate 4 is partially covering the adjusting parts 6.

Around the connecting openings 44, the top plate 4 is provided with dotted markings 32 which are provided, as discussed above, for indicating in which of the predetermined positions the adjusting parts 6 are positioned.

At the circumference and around the central opening 43 the top plate 4 is provided with folded edges 16 for reinforcing the top plate 4. These folded edges 16 are easily provided by folding over part of the top plate material at the circumference of the top plate 4 and around the central opening 43 in the top plate 4.

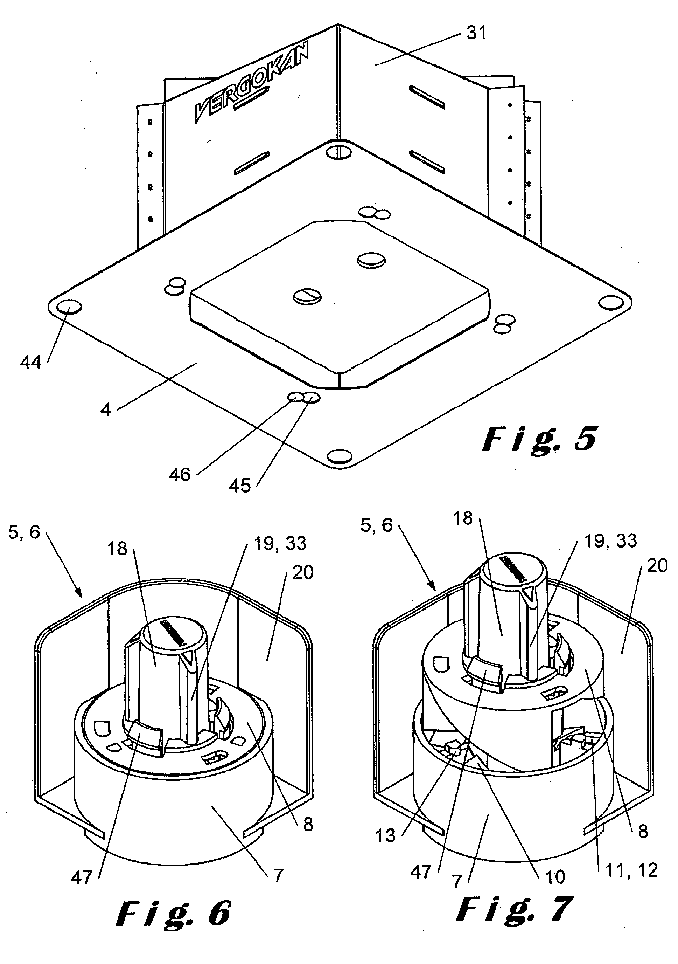

At each corner of the central opening 43 in the top plate 4 two interconnected circular openings 45 can be seen, a first circular opening having the largest diameter and a second circular opening having the smallest diameter. The interconnected circular openings 45 are provided for connecting a formwork element 31 to the top plate 4, as illustrated in Figures 4 and 5. For this purpose the formwork element 31 is provided with protrusions 46 which can be inserted through the first circular opening but engage in the second circular opening as will be discussed in more detail below. For connecting the formwork element 31 and the top plate 4 with each other, the protrusions 46 on the formwork element 31 are first positioned in the first circular opening and then moved to the second circular opening by slightly rotating the formwork element 31. This connection can be seen in Figure 5, whereas Figure 4 shows how the formwork element 31 is positioned above the top plate 4 before making the connection between both.

The formwork element 31 is used for leaving an opening in the floor above the central opening 43 in the top plate 4 of the adjustable floor box 1 when the floor is installed. This floor opening forms an access in the floor to the adjustable floor box 1, and in this opening the covering part is installed.

Figure 6 shows an adjusting part 6 of the adjustable floor box 1 of the embodiment of Figure 1. In this embodiment the adjusting part 6 is positioned in the lowest predetermined position of the predetermined positions of the adjusting means 5. In Figure 7 the adjusting part 6 is positioned in the highest predetermined position of the predetermined positions of the adjusting means 5. The adjusting parts 6 comprise a bottom part 7 and a top part 8, which are shown separate from each other in Figure 8. The bottom part 7 is shown separately in Figure 9.

The top part 8 supports on the bottom part 7, and both are configured for positioning the top part 8 at different predetermined distances with respect to the bottom part 7. The top part 7 is provided with three legs 9, which can be best seen in Figure 8. These legs 9 support on support positions 11 which are arranged on three inclined helical surfaces 10 provided on the bottom part 7. The inclined helical surfaces 10 can be best seen in Figure 9. Three support positions 11 are arranged at different heights on each of the inclined helical surfaces 10. A first support position 11 is provided at the bottom of each inclined helical surface 10, a second support position 11 is provided approximately halfway each inclined helical surface 10, and a third support position 11 is provided near the highest end of each inclined helical surface 11. The legs 9 are supported in these support positions 11, when the adjusting part 6 is moved to one of the predetermined positions. The legs supporting in the first support position 11 correspond with the first predetermined position of the adjusting means 5, and the other support positions 11 correspond similarly with the other predetermined positions. Figure 6 shows the adjustable part 6 in the first predetermined position and Figure 7 shows the adjustable part 6 in the third predetermined position.

The adjusting part 6 is moved between the different predetermined positions by rotating the top part 8 with respect to the bottom part 7 around a common axis. In this way, the legs 9 slide along the inclined helical surfaces 10 from one support position 11 to another support position 11, until the legs 9 are rested in one of the support positions 11. If the legs 9 are positioned in between support positions on the inclined helical surfaces 10, then gravity will pull the legs 9 back to support positions 11 which are arranged on a lower part of the inclined helical surfaces 10.

The bottom part 7 and the top part 8 are guided in their motion with respect to each other by means of cooperating guiding surfaces 14. The guiding surfaces 14 are in the shown embodiment provided by circular walls 15 which are arranged at the centre and at the circumference of both the bottom part 7 and the top part 8. The circular walls 15 are provided such that a circular wall 15 on the bottom part 7 and a circular wall 15 on the top part 8 fit into each other. In this way, the sides of the circular walls 15 which face each other form the guiding surfaces 14. An advantage of the circular walls 15 is that they prevent sideway movements of the bottom part 7 and the top part 8 with respect to each other.

For facilitating the manual movement of the top part 8 with respect to the bottom part 7, the adjusting part 6 is provided on top with gripping means 18. The gripping means 18 is in the embodiment of Figure 8 provided with ribs 33 which, as explained above, are also part of the indicating means 19 for indicating in which predetermined position the adjusting part 6 is positioned.

The support positions 11 are provided with protruding edges 12, which prevent the legs 9 from sliding out of the support positions 11 towards support positions 11 which are arranged on a lower part of the inclined helical surfaces 10. These protruding edges 12 can be seen in Figure 9.

At the highest end, each inclined helical surface 10 is provided with an upstanding wall 13. The upstanding wall 13 prevents the leg 9 from moving beyond the highest end of the inclined helical surface 10 on to a following inclined helical surface 10. These upstanding walls 13 can be seen in Figure 9.

The top part 8 is provided for being connected with the top plate 4 of the adjustable floor box 1. For this purpose, the top part 1 is provided with clicking legs 47, as can be seen in Figures 6 and 7. For connecting the top part 8 with the top plate 4 the clicking legs 47 are inserted through connecting openings 44 provided on the top plate 4, which can be seen in Figure 3. Once inserted through the connecting openings 44, the clicking legs 47 engage in the connecting openings 44, thereby forming the connection between the top part 8 and the top plate 4.

The bottom part 7 is provided for being connected with the bottom plate 2 of the adjustable floor box 1. Therefore, the bottom part 7 is provided at the bottom with a series of protrusions 48, as can be seen in Figure 9. For connecting the bottom part 7 with the bottom plate 2, these protrusions 48 are positioned in openings 37 provided in the bottom plate 2 for this purpose. These openings 37 can be seen in Figure 2.

The bottom part 7 is provided with an outer wall 20. When the bottom part 7 is installed on the bottom plate 2, then the outer wall 20 forms a part of the side walls of the adjustable floor box 1, as can be seen in Figure 1.

The bottom part 7 and the top part 8 can be connected with each other with connecting means (not shown). In the adjusting part 6 according to the embodiment of Figures 6-9, the connecting means comprise a bolt arranged in the circular wall 15 at the centre of the bottom part 7, and passing through an opening 49 on top of said circular wall 15. The bolt passing through said opening 49 is screwed into the top part 8 for forming the connection between the bottom part 7 and the top part 8. The bolt has a bolt head which is too large to pass through the opening 49 on top of the circular wall 15 in which the bolt is arranged. In this way, the bottom part 7 and the top part 8 can not get detached from each other. The length of the bolt should be so long as to allow the legs 9 of the top part 8 to be lifted completely over the inclined helical surfaces 10 and an upstanding wall 13 thereon. In an embodiment of the connecting means a resilient element, such as a spring, is provided between the bolt head and the opening 49 on top of the circular wall 15 in which the bolt is arranged. The resilient element is provided for pushing the top part 8 and the bottom part 7 against each other.

The number of support positions 11 on each inclined helical surface 10 is determined by the number of predetermined positions of the adjusting means 5 for positioning the top plate 4 at a distance from the bottom plate 2 of the adjustable floor box 1. The location of the support positions 11 along the inclined helical surfaces 10 is chosen based on the distances at which the adjusting means 5 have to position the top plate 4 from the bottom plate 2 of the adjustable floor box 1. These distances are determined by the height of the types of floor trunking that will be connected to the adjustable floor box 1.

In alternative embodiments, there are more or less legs 9 and inclined helical surfaces 10 than three.

In an alternative embodiment, the inclined helical surfaces 10 are provided on the top part 8 instead of on the bottom part 7, in which case the legs 9 are provided on the bottom part 7. In this way the top part 8 supports with the support positions 11 of the inclined helical surfaces 10 on the legs 9 of the bottom part 7.

Figure 10 shows an exploded view of the cover assembly according to an embodiment of the invention.

At the bottom of the figure the bottom plate 2 of a floor box 1 is partially shown. The cover assembly illustrated in Figure 10 is configured to be installed on the bottom plate 2. Only partial views of the bottom plate 2 are shown. The partial views are showing parts of the bottom plate 2 which are provided with attaching elements 28 for attaching the cover assembly to the bottom plate 2. In the embodiment of Figure 10, the attaching elements 28 are arranged between curved protruding walls 36 on the bottom plate 2, as discussed above.

The stackable elements 25 of the stepwise adjusting means 24 are inserted in the attaching elements 28. For attaching the stackable elements 25 to the bottom plate 2, they are clamped by the attaching elements 28. The stackable elements 25 are provided with an internally threaded opening (not visible) at one end, and an externally threaded connecting part 27 at the opposite end. This allows the stackable elements 25 to be stacked onto each other and connected with each other for positioning a support frame 22 at a distance from the bottom plate 2. The stackable elements 25 have a predetermined length, such that the support frame 22 may be positioned at a distance from the bottom plate 2 in steps of predetermined length. The stackable elements 25 can be connected with the support frame 22 by screwing the connecting part 27 of the stackable elements 25 into internally threaded openings (not visible) provided at the bottom of the support frame 22.

The cover assembly according to the embodiment of Figure 10 also comprises precise adjusting means 29. The precise adjusting means 29 are arranged on top of the support frame 22 and are used for positioning a covering part of the cover assembly at a distance from the support frame 22. The precise adjusting means 29 comprise screws 30 which are screwed into internally threaded openings 23 through the support frame 22. By screwing the screws 30 inwards or outwards of the threaded openings 23 in the support frame 22, the height of the precise adjusting means 29 may be adjusted.

The precise adjusting means 29 are connected to the covering part, which comprises a cover 170, a cover frame 171, a component holder 154 and a component holder frame 152. The covering part and the precise adjusting means 29 are connected to each other by arranging the heads of the screws 30 in between the component holder frame 152 and the cover frame 171. Therefore, the component holder frame 152 is provided with interconnected circular openings 26. For connecting the precise adjusting means 29 to the covering part, the screw head is inserted through the first circular opening with a diameter larger than the screw head, after which the screw 30 is moved to the second circular opening with a diameter smaller than the screw head. The cover frame 171 is then attached to the component holder frame 152 above the screw head. In the cover frame 171 there are openings with a smaller diameter than the screw head, which openings allow access of a screw driver to the screw head. In this way, the covering part moves together with the screws 30 when the screws 30 are screwed inwards or outwards of the threaded openings 23 through the support frame 22, allowing the distance of the covering part with respect to the support frame 22 to be adjusted precisely.

The cover frame 171 and the component holder frame 152 are arranged such that the distance between both may be varied. This may for example be achieved by connecting the cover frame 171 and the component holder frame 152 to each other with screws 200.

With a larger distance between the cover frame 171 and the component holder frame 152, the screw heads may move within a larger range between the component holder frame 152 and the cover frame 171. In this way the covering part is loosely connected to the precise adjusting means 29, allowing some movement of the covering part with respect to the precise adjusting means 29. This has the advantage that the covering part may be moved over a larger distance in each corner before the height of the covering part also needs to be adjusted in the others corners because the covering part is tilted and cannot be moved further in one of the corners.

With a smaller distance between the cover frame 171 and the component holder frame 152, the covering part is better attached to the precise adjusting means 29, while still allowing the height of the covering part to be adjusted with respect to the support frame 22 but now only in a smaller range in each corner before the other corners also have to be adjusted in height. This smaller distance should be not so small that the screw heads may not be rotated anymore. The screw heads should thus not be completely clamped between the cover frame 171 and the component holder frame 152.

Hence, for adjusting the height of the covering part with respect to the support frame 22 with the precise adjusting means 29, it is beneficial to first position the cover frame 171 at a larger distance with respect to the component holder frame 152. This allows the precise adjusting means 29 to operate over a large range in each corner of the covering part before the other corners also have to be adjusted. In this way the height of the upper surface of the covering part may be quickly set very close to the height of the upper surface of the floor. Afterwards the covering part may be fixed better to the precise adjusting means 29 by decreasing the distance between the cover frame 171 and the component holder frame 152, thereby still allowing a final fine-tuning of the height of the covering part with respect to the support frame 22.

In an embodiment of the present invention, with a limited amount of components multiple floor box systems can be provided. This is advantageous to reduce the overall amount of stock items and to increase the manufacturing volumes of individual parts.

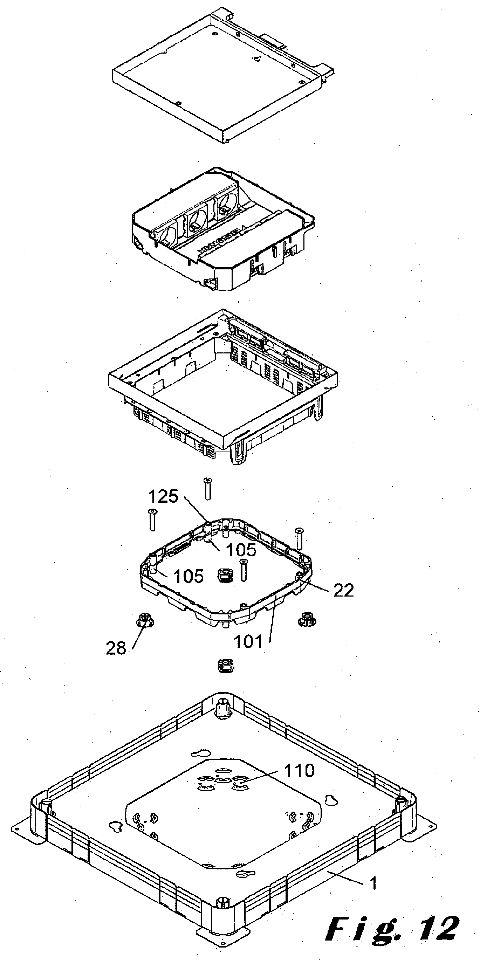

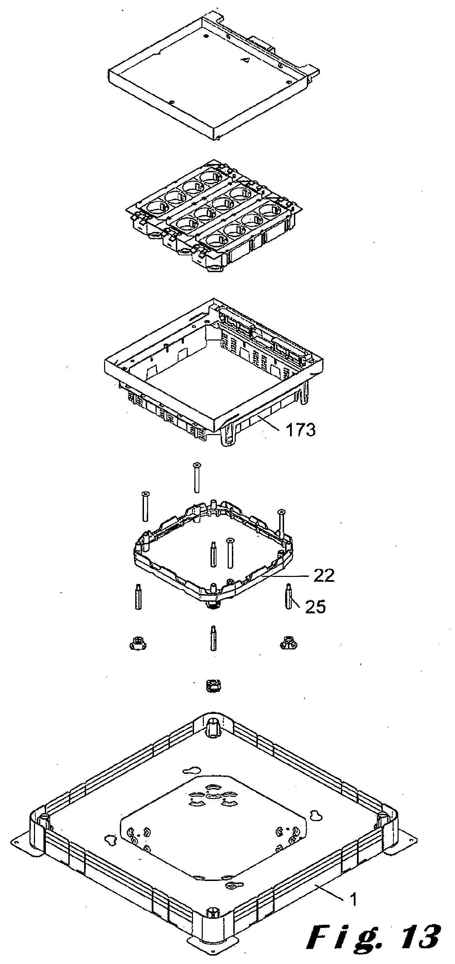

As illustrated in Figures 12 and 13, in an embodiment of the present invention the support frame 22 is mountable in two positions to form floor box systems with different heights from the floor foundation. The support frame 22 has four side walls 101 creating a closed sidewall contour. The top and bottom of the support frame 22 are open. On one end of the side walls projections 105 are extending. These extensions are providing on the other end of the side walls threaded holes 125 for receiving spacers 25. The outer diameter of the projections 105 and the spacers 25 are substantially the same such that the support frame 22 can be attached to the openings of the attachment elements 28 provided on the bottom plate of the floor box in two ways: by aligning the projections 105 in the openings of the attachment elements 28 or by aligning the spacers 25 in the openings of the attachment elements 28. In the latter case, the support frame 22 is rotated 180 degrees compared to the previous positioning. In this way, the same support frame 22 can be used for the floor box system with the lowest height as for the floor box system with the highest height.

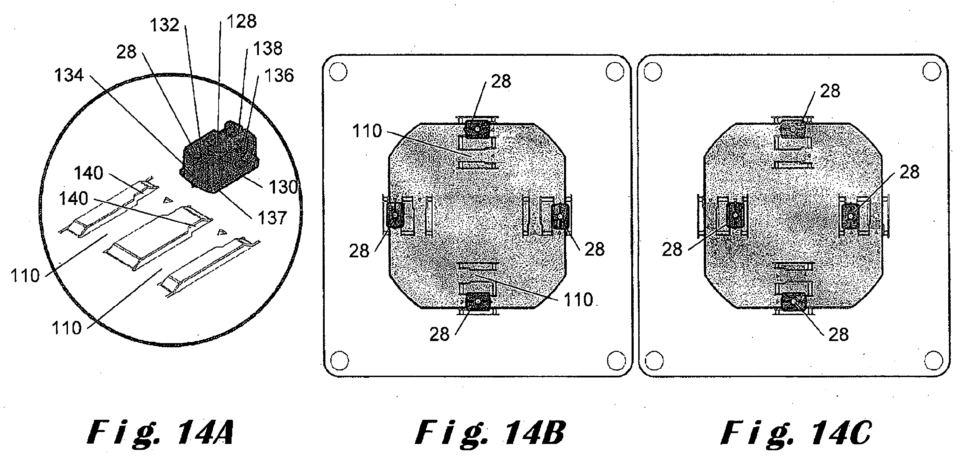

Referring to Figure 14, in an embodiment of the invention the bottom plate 2 has multiple positions 110 to receive attachment elements 28. An attachment element 28 is an injection molded part having two halves 130, 132 which can hinge to each other by a connection 134 between the two halves on one side. The attachment element 28 has a hole 128. The centreline of the hole 128 is substantially parallel to the axis of rotation of connection 134. Each half 130, 132 further has a second hole 136 with axis perpendicular to the axis of hole 128 and the axis of rotation of connection 134. The two holes 136 in both halves 132, 130 are aligned such that they can receive a fastening such as a screw or bolt to tighten the two halves 130, 132 together. The two holes 136 are also recessed into the halves such that a bolt and nut fastening can be used without the nut rotating when the bolt is rotating. This is arranged by a size for the recessed area 138 corresponding to the size wherein the nut can be received but in which the nut can not rotate. On the side of each half 130, 132 is at the bottom an extended portion 137 arranged to slide into a slot 140 formed on the bottom plate 2. Thus, to mount the attachment element 28 on the bottom plate 2, the element 28 with extended portions 137 on both sides slides into slots 140 on both sides. There are multiple positions on the bottom plate 2 arranged to receive an attachment element 28. This has the advantage that the bottom plate 2 of the floor box 1 can be used with multiple cover assemblies.

Figure 14B illustrates an embodiment wherein there are four attachment elements 28 and wherein each attachment element 28 has 2 positions. In Figure 14B the attachment elements 28 are mounted for the largest cover assembly. In Figure 14C, the attachment elements 28 are mounted to receive a rectangular cover assembly. Figure 14C also illustrates that the direction of the largest length of the rectangle is determined by the positioning of the attachment elements 28 to the bottom plate 2.

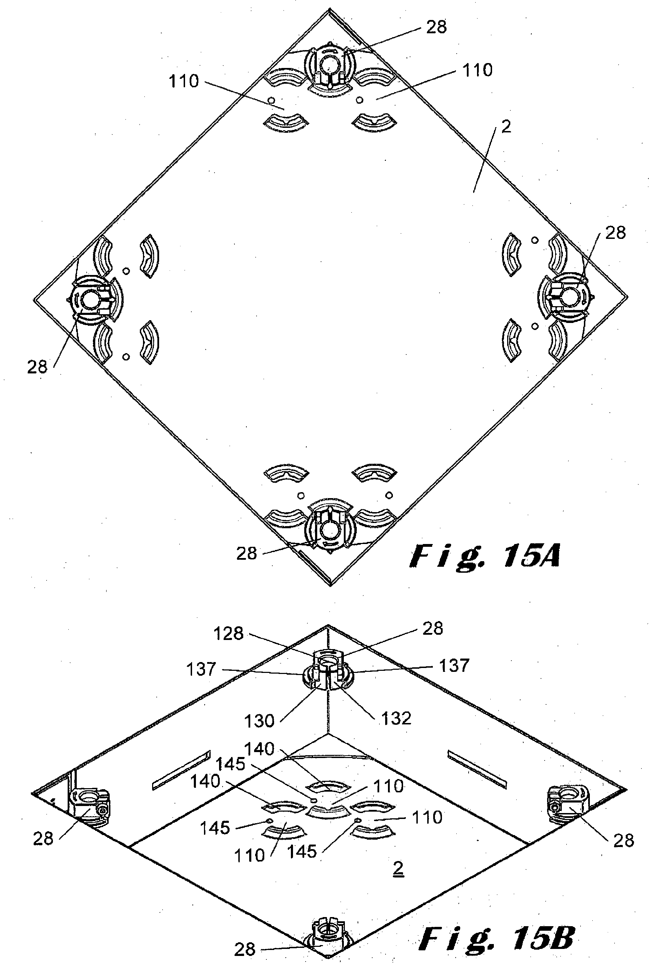

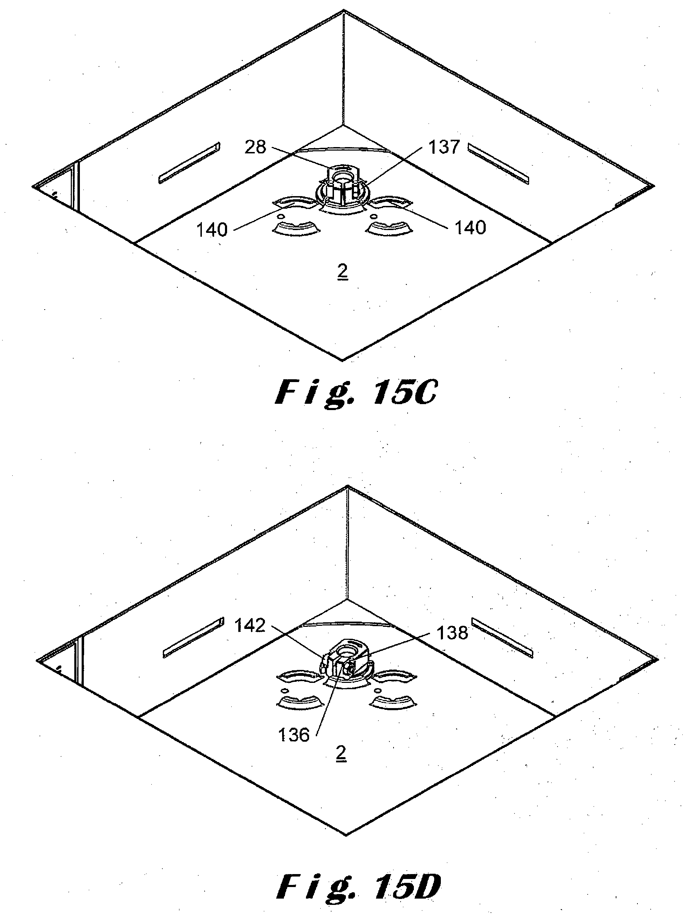

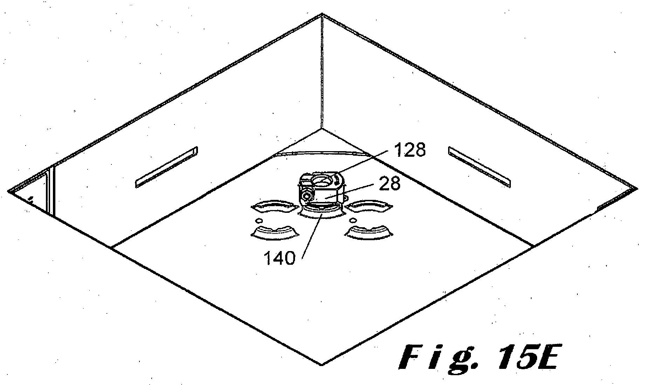

Referring to Figures 15A to 15E, an alternative embodiment of the attachment element 28 is shown. The attachment element 28 is also an injection molded part in two halves 130, 132. The two halves can slightly hinge with respect to each other. Each half 130, 132 has again an extended portion 137. Different from the embodiment in Figure 14, the extended portions 137 have a cylindrical outside wall to slide into a bended slot 140. This has the advantage that the attachment elements 28 can be mounted by a rotation movement in stead of a translation movement. The attachment elements 28 have on there bottom surface a protrusion which fits in a hole 145 in the bottom plate 2. The attachment element is first positioned with this protrusion in the bottom plate 2 and with the extended portions 137 positioned between a pair of slots 140. this positioning is illustrated in Figure 15C. The attachment element 28 is subsequently rotated moving the extended portions 137 in the slots 140 as illustrated in Figure 15D. In the end position, a protrusion on the side of the attachment elemest 28 is moved in a notch 17 (the notch 17 is referenced on Figure 10). This is the position of Figure 15E.

Once the attachment elements 28 are positioned on the positions of the bottom plate 2 corresponding to the cover assembly, there are a number of possibilities for the height of the cover with respect to the floor foundation, as illustrated in Figures 12 and 13. The height needed is dependent on the final floor height. For the lowest height of the floor box system, the support frame 22 has to be mounted in the cover assembly with the projections 105 facing the bottom plate 2 as discussed above and shown in Figure 12. In this configuration, the height of the floor system is in a preferred embodiment between 65mm and 92mm. In this low structure there is little space for guiding cables. The sides of the support frame 22 are provided with openings for guiding cables. If the support frame 22 is turned 180 degrees as described above and shown in Figure 13 and one spacer 24 is provided in each of the threaded holes 125 opposite to the projections 105, the height of the floor system is between 87mm and 134mm. The next range of the height of the floor system is with two spacers connected to each other and provided in the threaded holes 125 and is between 127mm and 174mm. More spacers can be used to increase this height stepwise as discussed above.

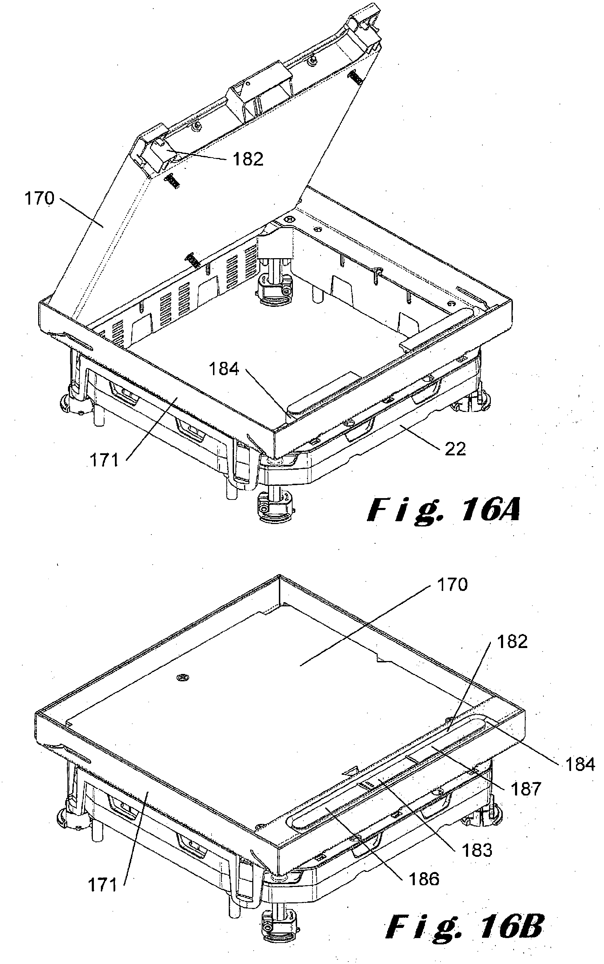

Once the height range is determined and arranged, the cover assembly is positioned in the holes of the attachment elements 28 and subsequently fixed with a bolt-nut fastening means as illustrated in Figure 16A and 16B. As described above, after the stepwise height adjustment with the spacers 24, the system comprises a precise adjustment.

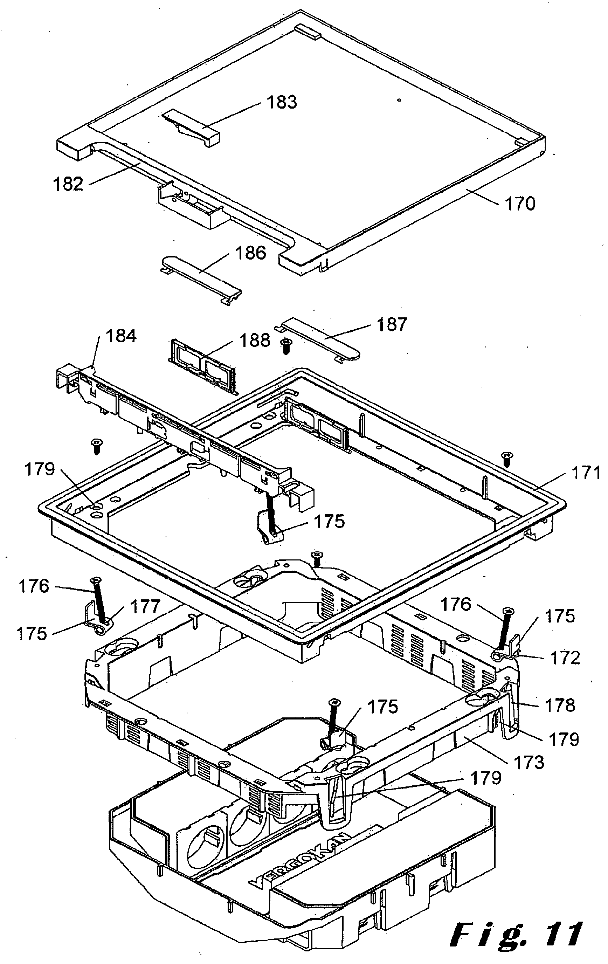

Referring to Figure 11, in an embodiment of the invention the cover assembly is not attached to the floor box 1 but is mounted independently above the floor box 1. A cover frame 171 is connected to a component holder frame 173. The component holder frame 173 is provided with an attachment mechanism to attach the component holder frame to the screed in case of used in an opening in screed or to floor tiles in case of used in an opening of floor tiles on an open construction. The attachment mechanism comprise a number of locking elements 175. The locking element 175 is a bended part of sheet metal material. The locking element 175 has a threaded hole 177 for a screw 176. The locking element is provided in a guide track 178 of the component holder frame 173. The screw is positioned in a hole 179 of the cover frame 171. By rotating the screw 176, the locking element 175 is moving up or down over the thread of the screw 176 in the guide track 178 of the component holder frame 173. The guide track 178 has an angled surface 179 which causes that the locking element 175 is moving outwards when the locking element 175 is moving upwards. In case of mounting in screed, this causes the teeth 172 on the locking element to press more and more on the screed when the locking element 175 is moved upwards by rotating the screw 176. In case on mounting in an open structure with floor tiles, the locking element is touching the floor tile and by rotating the screw the locking element is pressing on the underside of the floor tile.

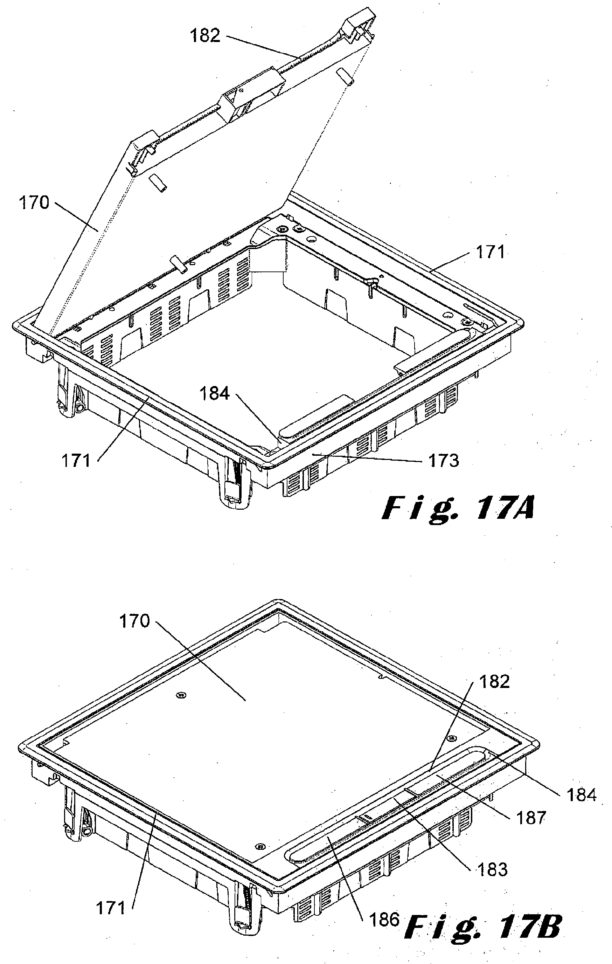

Referring to Figures 16A, 16B, 17A and 17B, two cover structures are shown in open and closed position. The cover structures have a cover frame 171 which is mounted to the component holder frame 152 and a he cover 170 which is pivotally mounted to the cover frame 171. A cable opening member 182 is connected to the cover 170, and a second cable opening member 184 is connected to the cover frame 171. The first and second cable opening member 182, 184 from together a closed cable opening as illustrated in Figures 16B and 17B. When no cables are provided through the openings, the openings can be closed by closure members 186, 187. The closure member are pivotally mounted such that they can be positioned in an open or closed position according to the need of the user. Below the closure member 186, 187 is a cable organizer provided to guide cables through the opening and avoid that the cables are obstructing the pivotally mounted cover 170. The cable organizer is for example shown in the exploded view of Figure 10. The cable organizer is also pivotally mounted. In a first position, the cable organizer is substantially parallel with the top surface of the cover in closed position. In this position, cables can be guided. In a second position, the cable organizer is rotated 90° resulting in a position substantially perpendicular to the top surface of the cover. In this position, the cable organizer is supporting the closure member 186, 187 in the closed position. To open the closure member 186, 187 from the closed position to the open position, first the cable organizer is rotated 90° and subsequently the closure member can be rotated in the open position.

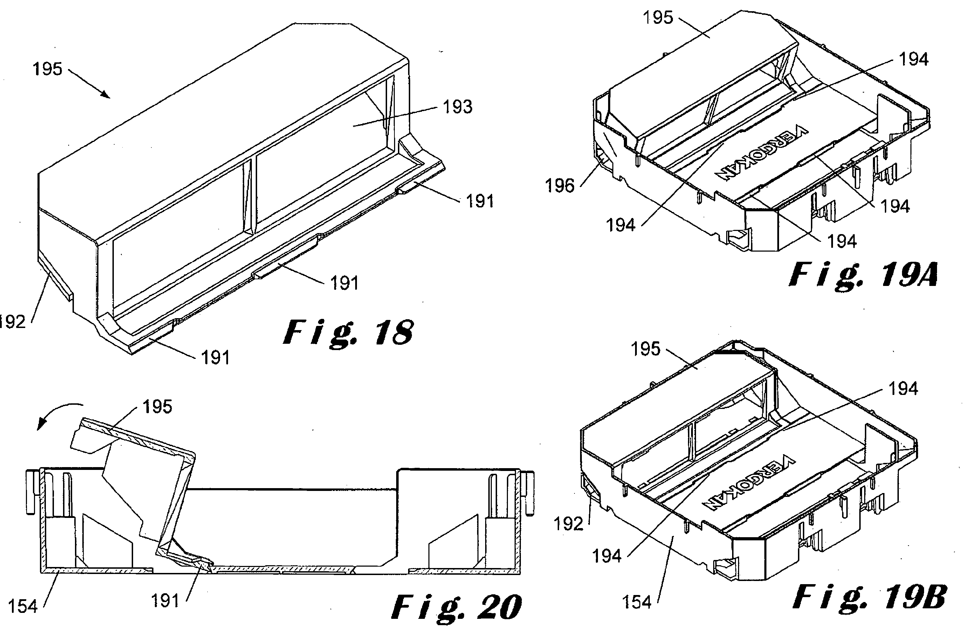

Referring to Figures 18, 19A, 19B and 20, the mounting of a component support member 195 is illustrated. As shown in Figure 18, The component support member 195 has positioning elements 191. These are provided to give the component support member 195 an initial position with respect to the component holder 154. The component support member 195 further has a rib 192 which will lock the member 195 in position when mounted in the component holder 154.

Shown in Figures 20 and 19A, to mount the component support member 195 in the component holder 154, the positioning elements 191 are first aligned with recesses 194 in the component holder 154. Subsequently, the component support member is rotated while the positioning elements 191 remain in the recesses 194 until a rib 192 provided on both sides of the component support member 195 is locking in an opening 196 of the component holder 154.

## Claims

1. A floor box system for mounting on a floor foundation, comprising
a floor box (1) configured to be positioned on the floor foundation;
a cover assembly arranged to be provided on the floor box wherein
said cover assembly is one of at least a first type of cover assemblies and a second type of cover assemblies; and attachment means (28) for attaching the cover assembly to the floor box (1);
**characterized in that** said floor box (1) comprises at least two positions (110) for positioning said attachment means (28) to the floor box (1) wherein the cover assembly is attachable to the floor box (1) with the attachment means (28) in a first position (110) of the at least two positions when the cover assembly is a cover assembly of the first type of cover assemblies and the cover assembly is attachable to the floor box (1) with the attachment means (28) in a second position (110) of the at least two positions when the cover assembly is a cover assembly of the second type of cover assemblies.

2. A floor box system according to claim 1, wherein said attachment means comprise at least three attachment elements (28) and said floor box (1) comprises at least two positions (110) for each attachment element (28).

3. A floor box system according to claim 2, wherein said floor box (1) comprises a bottom plate (2) and wherein said at least two positions (110) for each attachment element (28) comprise slots (140) in said bottom plate (2).

4. A floor box system according to claim 3, wherein each of said at least three attachment elements (28) comprises extended side walls (137) for attaching said attachment elements (28) to a pair of slots (140) in said bottom plate (2).

## Patentansprüche

1. Bodendosesystem zur Montage auf einem Bodenfundament, umfassend
eine Bodendose (1), die zum Positionieren auf dem Bodenfundament konfiguriert ist;
eine Abdeckanordnung, die zum Bereitstellen auf der Bodendose angeordnet ist, wobei die Abdeckanordnung mindestens einen ersten Typ von Abdeckanordnungen oder einen zweiten Typ von Abdeckanordnungen darstellt; und
Befestigungsmittel (28) zum Befestigen der Abdeckanordnung an der Bodendose (1);
**dadurch gekennzeichnet, dass** die Bodendose (1) mindestens zwei Positionen (110) zum Positionieren der Befestigungsmittel (28) an der Bodendose (1) umfasst, wobei die Abdeckanordnung in einer ersten Position (110) der mindestens zwei Positionen mit den Befestigungsmitteln (28) an der Bodendose (1) befestigbar ist, wenn die Abdeckanordnung eine Abdeckanordnung des ersten Typs von Abdeckanordnungen darstellt, und die Abdeckanordnung in einer zweiten Position (110) der mindestens zwei Positionen mit den Befestigungsmitteln (28) an der Bodendose (1) befestigbar ist, wenn die Abdeckanordnung eine Abdeckanordnung des zweiten Typs von Abdeckanordnungen darstellt.

2. Bodendosensystem nach Anspruch 1, wobei die Befestigungsmittel mindestens drei Befestigungselemente (28) umfassen und die Bodendose (1) mindestens zwei Positionen (110) für jedes Befestigungselement (28) umfasst.

3. Bodendosensystem nach Anspruch 2, wobei die Bodendose (1) eine Bodenplatte (2) umfasst und wobei die mindestens zwei Positionen (110) für jedes Befestigungselement (28) Schlitze (140) in der Bodenplatte (2) umfassen.

4. Bodendosensystem nach Anspruch 3, wobei jedes der mindestens drei Befestigungselemente (28) verlängerte Seitenwände (137) zum Befestigen der Befestigungselemente (28) an einem Paar Schlitze (140) in der Bodenplatte (2) umfasst.

## Revendications

1. Système de boîtier de sol pour montage sur une fondation de sol, comprenant
un boîtier de sol (1) conçu pour être positionné sur la fondation de sol ;
un ensemble couvercle disposé pour être fourni sur le boîtier de sol, dans lequel ledit ensemble couvercle est un type parmi au moins un premier type d'ensembles couvercles et un second type d'ensembles couvercles ; et
un moyen de fixation (28) permettant de fixer l'ensemble couvercle au boîtier de sol (1) ;
**caractérisé en ce que** ledit boîtier de sol (1) comprend au moins deux positions (110) pour positionner ledit moyen de fixation (28) sur le boîtier de sol (1) dans lequel l'ensemble couvercle peut être fixé au boîtier de sol (1) avec le moyen de fixation (28) dans une première position (110) parmi lesdites au moins deux positions lorsque l'ensemble couvercle est un ensemble couvercle du premier type d'ensembles couvercles et l'ensemble couvercle peut être fixé au boîtier de sol (1) avec le moyen de fixation (28) dans une deuxième position (110) desdites au moins deux positions lorsque l'ensemble couvercle est un ensemble couvercle du second type d'ensembles couvercles.

2. Système de boîtier de sol selon la revendication 1, dans lequel ledit moyen de fixation comprend au moins trois éléments de fixation (28) et ledit boîtier de sol (1) comprend au moins deux positions (110) pour chaque élément de fixation (28).

3. Système de boîtier de sol selon la revendication 2, dans lequel ledit boîtier de sol (1) comprend une plaque inférieure (2) et dans lequel lesdites au moins deux positions (110) pour chaque élément de fixation (28) comprennent des fentes (140) dans ladite plaque inférieure (2).

4. Système de boîtier de sol selon la revendication 3, dans lequel chacun desdits au moins trois éléments de fixation (28) comprend des parois latérales étendues (137) pour la fixation desdits éléments de fixation (28) à une paire de fentes (140) dans ladite plaque inférieure (2).
